# FASCICULE DE BREVET EUROPEEN

(11) **EP 2 547 899 B1**
(45) Date de publication et mention de la délivrance du brevet: **11.06.2014**
(21) Numéro de dépôt: 11715941.8
(22) Date de dépôt: 18.03.2011
(51) Int. Cl.: F03B 13/14

(54) **DISPOSITIF DE RECUPERATION DE L'ENERGIE DES VAGUES ET PROCEDE CORRESPONDANT**
VORRICHTUNG ZUR GEWINNUNG VON WELLENENERGIE UND ENTSPRECHENDES VERFAHREN
DEVICE FOR RECOVERING WAVE ENERGY AND CORRESPONDING METHOD

(30) Priorité: 18.03.2010 FR 1051952
(43) Date de publication de la demande: 23.01.2013
(73) Titulaire: Artelia Eau & Environnement, 38130 Echirolles (FR)
(72) Inventeur: GARCIA, Nicolas, F-38100 Grenoble (FR); BONGRAND, Thierry, F-38660 Saint Vincent De Mercuze (FR)
(74) Mandataire: Prugneau, Philippe
(86) Numéro de dépôt international: PCT/FR2011/050553
(87) Numéro de publication internationale: WO 2011/114072

(56) Documents cités:
- EP-A2- 1 890 032
- WO-A2-2009/139644
- DE-A1- 3 803 570
- DE-U- 7 318 196
- FR-A- 943 181
- FR-A1- 2 548 739
- GB-A- 612 175
- GB-A- 613 160
- US-A- 1 412 424

## Description

### Domaine technique

L'invention concerne un dispositif de récupération de l'énergie des vagues, un ensemble de récupération d'énergie comprenant plusieurs de ces dispositifs, ainsi qu'un procédé de récupération de l'énergie des vagues.

La présente invention concerne le domaine technique de la récupération de l'énergie liée aux vagues, lesquelles peuvent être définies de façon générale comme le déplacement, à la surface des mers et des lacs, d'ondes générées par le vent. De manière habituelle, on distingue les vagues ordinaires, provoquées par un vent établi sur le lieu même de leur observation, et un type particulier de vagues, dénommée houle, qui est causée par des phénomènes atmosphériques intervenant à grande distance de l'endroit où elle est observée. A cet égard, l'invention vise l'utilisation de l'énergie produite par tout type de vagues et, plus spécifiquement, par la houle.

### Technique antérieure

On connaît déjà des agencements visant ce type de récupération énergétique, sur le principe du remplissage par les vagues d'un bassin perché, l'une de ces solutions étant connue sous la référence WAVE DRAGON. Ce dispositif comprend une rampe, le long de laquelle la houle peut gonfler et déferler jusqu'à déborder, par-dessus un point haut, dans un réservoir. Ceci permet donc d'élever le niveau de l'eau de la mer, qui est ainsi stockée dans le réservoir puis turbinée, de façon à produire de l'énergie électrique.

On connait différents types d'agencement à débordement fonctionnant sur le même principe.

Un tel agencement est notamment décrit dans la demande de brevet américain US 1,412,424 qui divulgue un dispositif comportant un conduit précédé d'un canal fermé dont le fond incliné définit un point haut au-delà duquel l'eau qui a débordé dans le conduit est bloquée par un clapet anti-retour. Le conduit alimente un bélier hydraulique permettant d'élever l'eau dans un réservoir prévu à une hauteur supérieure. Ce dispositif comporte des moyens de réglage des positions horizontale et verticale du canal. Ce dispositif est de type à écoulement forcé et nécessite pour fonctionner d'être submergé par les vagues. Il permet donc de ne récupérer que la simple force dynamique des vagues qui s'échouent sur une plage.

La demande de brevet français FR 2 548 739 décrit une barge flottante comportant un canal pourvu d'un plan incliné couplé à des glissières verticales autorisant le réglage en hauteur du canal. Le canal est pourvu d'un rebord de déferlement débordant dans un réservoir de recueil séparé d'un réservoir de tranquillisation par une plaque pourvue d'orifices, la sortie du réservoir de tranquillisation étant obturée par un clapet rigide. Le dispositif décrit dans le modèle d'utilité allemand DE 73 18 196 est sensiblement similaire au précédent.

La demande internationale de brevet WO 2009/139 644 décrit un dispositif comportant un canal incliné et un réservoir, pourvus chacun de roues aptes à coopérer avec des rails fixés sur une embase inclinée pour autoriser le réglage en hauteur du canal et du réservoir. Le canal est séparé du réservoir par un point haut autorisant le débordement du haut de la vague.

La demande de brevet européen EP 1 890 032 et la demande de brevet allemand DE 38 03 570 décrivent des dispositifs aptes à être utilisés dans des zones de grandes profondeurs maritimes. Ces dispositifs comportent des canaux convergents dont les extrémités sont fermées afin que les vagues pincées viennent en butée, s'amplifient et débordent par-dessus la crête des canaux pour se déverser dans un réservoir réparti de part et d'autre des parois de chaque canal. La direction, la hauteur et la position des canaux peuvent être adaptées.

Ces dispositifs de débordement ne permettent en particulier pas de récupérer les petites vagues qui ne franchissent pas la crête.

L'invention vise une augmentation de la hauteur des vagues, non pas par gonflement sur une rampe, mais par leur propagation dans un canal convergent. Une telle solution est par exemple décrite dans le brevet français FR 943 181, dans le brevet US 612 175, dans le brevet américain US 2,441,759, ou encore dans le brevet anglais GB 613160.

Ces quatre documents décrivent un procédé de captage de l'énergie de la houle, dans lequel l'eau de mer est dirigée vers un canal de forme adaptée. De façon plus précise ce canal, qui est ouvert à la fois vers le haut et vers le large, est de type convergent à savoir que sa dimension transversale diminue au fur et à mesure de la progression des vagues. De plus, l'extrémité aval de ce canal est obturée par un clapet, dénommé encore « ajutage clapet », qui permet le passage de l'eau dans un unique sens, dans le sens de la propagation de la houle depuis l'entrée du canal en direction de sa sortie.

En service, la forte convergence dans le canal, associée au pincement dans l'ajutage clapet, amplifient la hauteur de la houle incidente et transforment l'onde initiale d'oscillation verticale en une onde de translation horizontale, sans déferlement ni réflexion significative de l'énergie vers le large. Ceci provoque par conséquent une augmentation de la hauteur de la houle, qui permet d'élever l'eau de la mer de plusieurs mètres au-dessus du niveau moyen de la mer.

L'eau de mer ainsi élevée présente donc une énergie potentielle, qui peut être utilisée de façon avantageuse. A cet effet, on crée une chute d'eau à partir du réservoir, laquelle eau peut être turbinée par exemple par des turbines hélices, de façon à générer de l'énergie électrique. Cette eau peut également alimenter des installations connexes, telles que par exemple un bassin portuaire.

Le captage de l'énergie de la houle, tel que décrit dans ces documents antérieurs, présente cependant certains inconvénients. En effet, ces dispositifs ne se révèlent pas d'une efficacité satisfaisante, en particulier lorsqu'ils sont mis en oeuvre sur des zones à fort marnage, ou encore lorsque les caractéristiques de la houle présentent de fortes variations.

### Exposé de l'invention

L'invention vise à remédier à ces inconvénients et à améliorer le rendement de la récupération d'énergie houlomotrice. A cet effet, elle a pour objet un dispositif de récupération de l'énergie des vagues selon la revendication 1, comprenant au moins un canal d'amplification de la hauteur des vagues, ledit canal étant ouvert vers le haut et comprenant une entrée, un fond et une sortie débouchant dans un clapet, ladite entrée et ladite sortie étant reliées par des parois latérales, la dimension transversale dudit canal entre lesdites parois latérales diminuant vers ladite sortie, ledit dispositif comprenant en outre au moins un réservoir de stockage d'eau, mis en communication directe avec ledit canal par ledit clapet, ainsi que des moyens de transformation de l'énergie potentielle de l'eau stockée dans ledit réservoir, en énergie électrique, caractérisé en ce qu"il comprend une structure fixe, immobile par rapport au fond de la mer, ainsi qu'une structure mobile, propre à être déplacée par rapport à la structure fixe au moins selon la direction verticale, la structure mobile comportant au moins le fond du canal ainsi mobile, au moins selon une direction verticale, par rapport au fond de la mer, les parois latérales convergentes étant convexes avec une section horizontale en forme de trompette, de préférence selon une courbe logarithmique ou hyperbolique, le canal se terminant par un ajutage se présentant sous la forme d'une fente étroite s'étendant en direction verticale depuis le fond jusqu'au sommet du canal, l'ajutage étant fermé par le clapet agencé pour s'ouvrir dés que la pression dynamique de l'eau se présentant à l'entrée du clapet est supérieure à la pression statique dans le réservoir et à se refermer dés l'inversion du débit d'eau.
Le clapet est couplé à au moins un diffuseur prévu dans le réservoir et comportant des parois latérales s'écartant l'une de l'autre d'un angle α compris entre 5 et 7 degrés.
Le dispositif de récupération d'énergie comprend en outre des moyens de commande, propres à commander le déplacement du fond de chaque canal selon la direction verticale, ces moyens de commande étant mis en communication avec des moyens de fourniture d'au moins un paramètre de la dynamique marine, choisi dans le groupe comprenant au moins le niveau de la marée et les paramètres de la houle, tels que la hauteur des vagues, la période des vagues.

On notera tout d'abord qu'il est du mérite de la Demanderesse d'avoir identifié que la profondeur d'eau dans le canal convergent, utilisé dans l'état de la technique, est un paramètre fondamental dans la récupération optimale de l'énergie des vagues avec un canal d'amplification. En effet, si le réglage en hauteur semble au premier abord important pour l'optimisation des dispositifs de récupération par débordement, il n'en est pas de même pour les dispositifs à amplification qui, de part l'amplification, semble à première vue s'affranchir du paramètre hauteur. Or, si cette profondeur est trop faible, la vague a tendance à déferler avant d'atteindre le clapet placé en bout de canal, ce qui conduit à dissiper une grande partie de l'énergie que l'on souhaite récupérer. En revanche, si elle est trop importante, un phénomène d'oscillation en masse prend naissance dans le canal, réduisant l'écoulement horizontal de remplissage du réservoir.

Par conséquent, il est avantageux que cette profondeur d'eau dans le canal reste proche d'une valeur bien déterminée. Dans ces conditions, l'utilisation d'un canal à fond fixe, par rapport au fond de la mer, n'est pas efficace notamment dans le cas de marées de forte amplitude, qui induisent alors de grandes variations de la profondeur d'eau dans le canal.

Or, conformément à l'invention, le fait de prévoir un fond mobile, à savoir dont la cote verticale est variable par rapport au fond de la mer, permet de s'adapter aux variations du niveau moyen de la mer dues aux marées. Ainsi, l'invention autorise un déplacement vertical relatif entre le fond du canal convergent et le fond de la mer, de façon à conserver une profondeur moyenne sensiblement constante dans ce canal.

Par ailleurs, la cote verticale variable du fond du canal permet de s'adapter à des paramètres de la dynamique marine, autres que ceux liés à la marée. A cet égard, on citera notamment la période de pic spectrale Tp de la houle, ou encore la hauteur significative Hs de la houle.

De plus, le fait de prévoir des parois latérales en forme de trompette et un clapet permet d'optimiser le passage de l'eau et d'améliorer le rendement du dispositif.

Le dispositif de récupération d'énergie selon l'invention peut présenter une ou plusieurs des particularités suivantes :
- la structure mobile comprend, outre ledit fond, le clapet, le réservoir et les moyens de transformation ;
- la structure mobile comprend au moins un ballast, propre à être rempli ou vidé, en vue du déplacement de cette structure mobile selon la direction verticale ;
- les parois latérales ont une convergence proche de zéro en bout du canal, à proximité du clapet,
- le fond possède une partie principale, adjacente au clapet, qui est sensiblement horizontale et une extrémité libre qui plonge dans une cavité ménagée dans la structure fixe pour limiter les sous-pressions induites par la houle sous le fond, tout en empêchant le passage de rebuts transportés par la mer sous la structure mobile ;
- le clapet comporte au moins une latte prévue sensiblement dans la continuité d'au moins une des parois latérales du canal, la latte s'étendant au moins à un niveau supérieur à celui du niveau maximum de l'eau dans le réservoir ;
- l'ajutage a une largeur sensiblement constante sur toute sa hauteur, la largeur étant de l'ordre de quelques dizaines de centimètres, par exemple d'environ 15 à 35 cm, la hauteur étant de plusieurs mètres, par exemple de plus de 10 m ;
- le clapet comporte au moins deux lattes prévues en regard l'une de l'autre de part et d'autre de l'ajutage, chaque latte ayant une largeur active au contact de l'eau supérieur à la largeur de l'ajutage et de préférence comprise entre une à trois fois la largeur de l'ajutage ;
- les parois latérales sont reliées entre-elles par des ailettes ayant des lignes d'attaque sensiblement horizontales, l'ailette la plus proche du fond du réservoir étant sensiblement horizontale, les ailettes suivantes étant inclinées progressivement de plus en plus vers le haut du réservoir, l'inclinaison étant prévue du bas vers le haut dans le sens d'entrée de l'eau dans le réservoir ;
- le diffuseur comporte une première portion apte à recevoir la latte écartée et une seconde portion prévue au-delà de la première portion dans le sens d'entrée de l'eau dans le réservoir, les première et seconde portions étant reliées entre-elles par des conduits de circulation les mettant en communication ;

L'invention a également pour objet un ensemble de récupération de l'énergie des vagues, comprenant au moins deux dispositifs de récupération d'énergie tels que ci-dessus, ces dispositifs étant placés côte à côte.

L'invention a enfin pour objet un procédé de récupération de l'énergie des vagues selon la revendication 12 au cours duquel on amplifie dans un canal d'amplification la hauteur des vagues, on fait déboucher, directement par l'intermédiaire d'un clapet, la vague ainsi amplifiée dans un réservoir de stockage d'eau, on transforme l'énergie potentielle de l'eau stockée dans le réservoir en énergie électrique, caractérisé en ce que l'on utilise au moins un dispositif tels que ci-dessus, en ce que l'on utilise un canal se terminant par un ajutage se présentant sous la forme d'une fente étroite s'étendant en direction verticale depuis le fond du canal jusqu'au sommet du canal et en ce que l'on règle la hauteur de la structure mobile, par rapport au fond de la mer en fonction d'au moins un paramètre de la dynamique marine, choisi dans le groupe comprenant au moins le niveau de la marée et les paramètres de la houle, tels que la hauteur des vagues, la période des vagues.

Au cours de ce procédé, on peut utiliser un clapet couplé à au moins un diffuseur prévu dans le réservoir et comportant des parois latérales s'écartant l'une de l'autre d'un angle α compris entre 5 et 7 degrés pour récupérer l'énergie cinétique de l'écoulement au travers du clapet pour lequel la vitesse de l'eau est très élevée.

### Description sommaire des dessins

L'invention sera encore mieux comprise à la lecture de la description suivante de différents modes de réalisation, donnés à titre non limitatif et en référence aux dessins annexés, dans lesquels :
- la figure 1 est une vue schématique illustrant l'implantation, dans une digue, d'un dispositif de récupération de l'énergie des vagues, conforme à un premier mode de réalisation de l'invention ;
- la figure 2 est une vue en coupe longitudinale, illustrant ce dispositif de récupération de l'énergie des vagues, conforme à l'invention ;
- les figures 3 et 4 sont des vues respectivement de dessus et de face, illustrant ce dispositif;
- les figures 5 et 6 sont des vues en perspective, selon deux angles différents, illustrant ce dispositif;
- les figures 7 et 8 sont des vues schématiques en coupe longitudinale, illustrant la mise en oeuvre de ce dispositif;
- les figures 9 et 10 sont des vues schématiques, illustrant deux autres modes de réalisation du dispositif conformes à l'invention;
- la figure 11 est une vue de détail, en coupe et de dessus, du clapet et du diffuseur du dispositif de récupération selon l'un quelconque des modes de réalisation de l'invention ; et
- la figure 12 est une vue en coupe du clapet et du diffuseur de la figure 11.

### Description des modes de réalisation

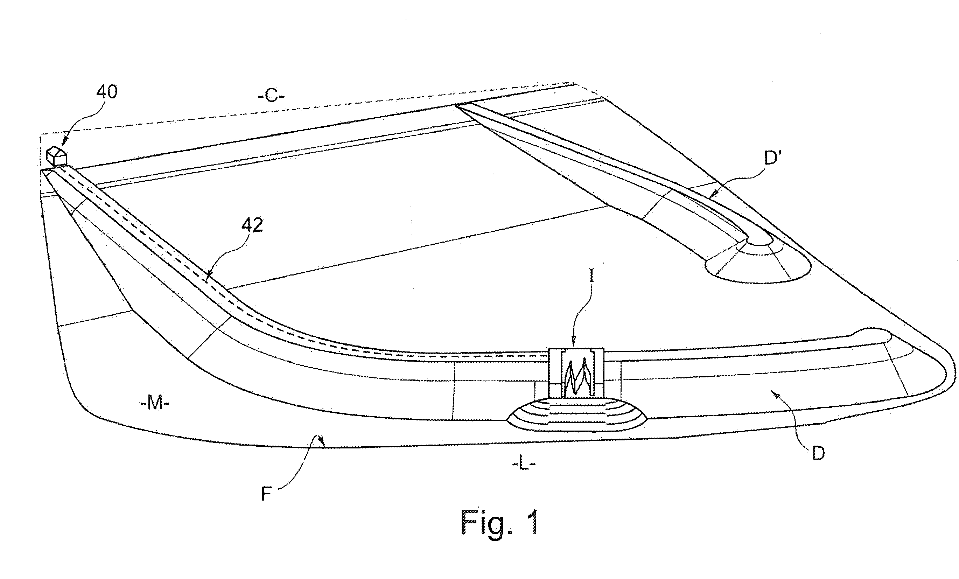

Les figures 1 à 8, 11 et 12 illustrent un premier mode de réalisation d'un dispositif conforme à l'invention, désigné dans son ensemble par la référence I. Ce dernier est installé sur une digue D, dont l'implantation est plus particulièrement visible à la figure 1. Sur les figures, on note également M la mer, F son fond, L le large et C la côte. Dans ce premier mode de réalisation le dispositif assure, outre sa fonction de production d'énergie qui sera détaillée plus loin, celle de protection de la côte ou d'un bassin portuaire.

Par ailleurs, en référence à la figure 1, le dispositif I est relié à un local électrique 40 placé sur la côte C, via une ligne électrique 42. Cette dernière permet, de façon connue en soi, l'évacuation de l'énergie électrique produite par le dispositif I, en vue de son exploitation ultérieure.

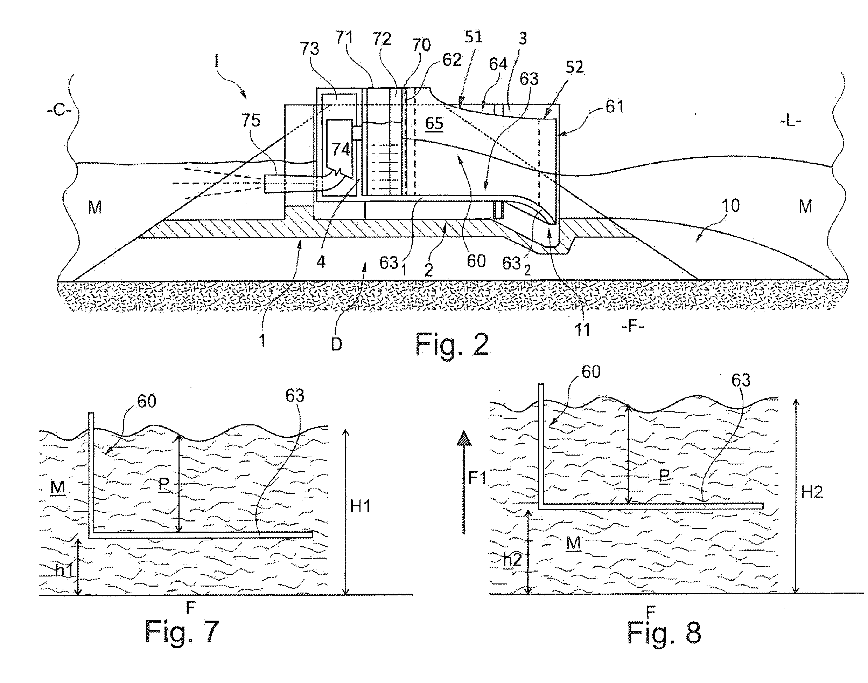

En référence aux figures 2 à 6, ce dispositif I comprend une structure fixe 1, immobile par rapport à la digue D, ainsi qu'une structure mobile 51, propre à être déplacée par rapport à la structure fixe 1 et donc par rapport à la digue D elle-même et à la hauteur du niveau d'eau de la mer M. Dans ce premier mode de réalisation, la structure fixe 1, réalisée par exemple en béton armé, est encastrée dans la digue D, de façon à assurer la stabilité de l'ensemble du dispositif I à l'égard des fortes houles.

La structure fixe 1 comprend une embase 2, ou radier, de laquelle s'étendent deux parois latérales 3, ou bajoyers, reliées par une paroi d'extrémité 4 du côté arrière. Chaque paroi latérale 3 est respectivement creusée d'une encoche 5, alors que deux échancrures 6 sont ménagées dans la paroi d'extrémité 4. Les fonctions de ces encoches 5 et de ces échancrures 6 seront détaillées plus en détail dans ce qui suit.

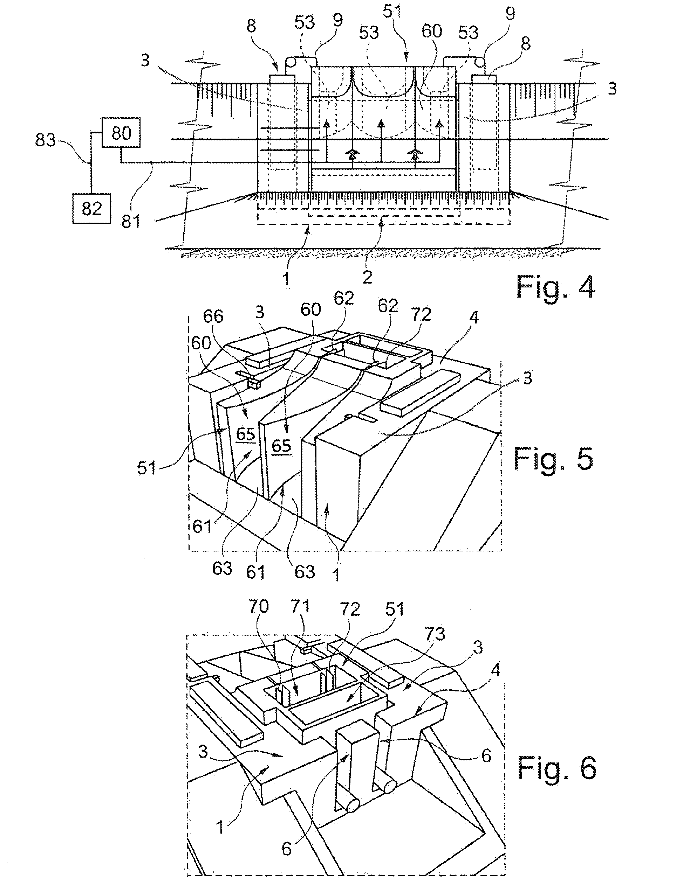

De plus, chaque paroi latérale 3 définit un logement vertical 7, permettant la réception de contrepoids 8. Ces derniers sont reliés à la structure mobile 51 par l'intermédiaire de systèmes de renvoi, tels des poulies, qui sont représentés schématiquement et sont affectés de la référence 9 sur la figure 4. Enfin un talus 10, visible sur la figure 2 et prévu en avant du pied de la digue D, assure de façon connue en soi la transition progressive entre les fonds respectifs F de la mer M et de la structure mobile 51.

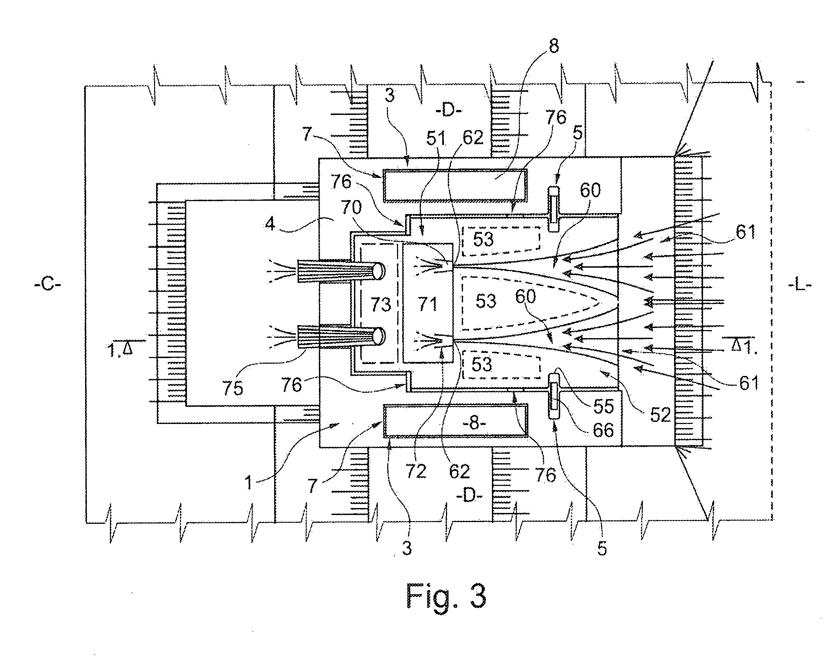

Cette structure mobile 51 possède une partie frontale 52, visible sur les figures 2 et 3, tournée vers le large L, qui est échancrée de façon à former deux canaux 60. Chaque canal 60, ouvert vers le haut sur toute sa longueur, possède une entrée 61 tournée vers le large L et une sortie 62 opposée à l'entrée 61, l'entrée 61 et la sortie 62 étant reliées par des parois latérales 65 visibles sur les figures 2 et 5, ainsi que par un fond 63 orienté vers le fond F de la mer M. Le fond 63 possède une partie principale 63₁, adjacente à la sortie 62, qui est globalement horizontale, ainsi qu'une extrémité libre 63₂ adjacente à l'entrée 61 et qui plonge dans une cavité 11 ménagée dans l'embase 2 de la structure fixe 1. Ceci permet de limiter les sous-pressions induites par la houle sous le fond 63, tout en empêchant le passage de rebuts transportés par la mer M sous la structure mobile 51.

Afin d'augmenter la hauteur de la houle lors de son passage dans les canaux 60, les parois latérales 65 de ces derniers sont convergentes et s'étendent sur plusieurs mètres de hauteur jusqu'au sommet 64, la hauteur étant au point le plus haut de plusieurs mètres, par exemple de l'ordre de 12 m. En d'autres termes, leur dimension transversale diminue, de préférence continûment, depuis l'entrée 61 vers la sortie 62. De plus, la cote verticale du sommet 64 de chaque canal 60, ou hauteur de canal 60 visible sur la figure 2, augmente, de préférence continûment, depuis l'entrée 31 vers la sortie 62. Le fait que chaque canal 60 soit ouvert vers le haut permet l'amplification libre de la hauteur de la houle. Les canaux 60 sont donc des canaux d'amplification à l'inverse de certains canaux de l'art antérieur, fermés sur le dessus, qui génèrent un écoulement forcé et ne permettent pas d'amplifier librement la hauteur de la houle pour augmenter le rendement du dispositif.

La partie frontale 52 de la structure mobile 51 reçoit trois ballasts 53, de type connu en soi, lesquels bordent deux à deux chaque canal 60. Chaque ballast 53 comprend, de façon classique, des réservoirs ainsi qu'un système de pompage et de vidage de l'eau de mer. Ainsi, en faisant varier le niveau de remplissage des réservoirs, il est possible d'ajuster la ligne de flottaison de la structure mobile 51, comme cela est expliqué plus en détail aux figures 7 et 8.

La partie frontale 52 est enfin creusée de deux encoches 55 visibles sur la figure 3, placées en regard de celles 5 ménagées dans la structure fixe 1. Les différentes encoches 55, 5 coopèrent avec des verrous 66, lesquels sont déplaçables transversalement entre une position de blocage dans laquelle ils pénètrent dans les deux encoches 5 et 55, et une position libre dans laquelle ils sont escamotés dans une seule des encoches, 5, 55 de façon à permettre le déplacement de la structure mobile 51 par rapport à la structure fixe 1.

Dans une première variante de réalisation on peut prévoir que, dans leur position de blocage, les verrous 66 immobilisent la structure mobile 51 par rapport à la structure fixe 1 uniquement dans un plan horizontal, mais permettent un débattement vertical, par coulissement de la structure mobile 51 le long des parois latérales des verrous 66. A titre d'alternative, on peut aussi prévoir que ces verrous 66 présentent des formes adaptées, notamment en créneaux, et des dispositifs auxiliaires de manière à assurer une immobilisation mutuelle de la structure mobile 51 par rapport à la structure fixe 1, dans les trois directions.

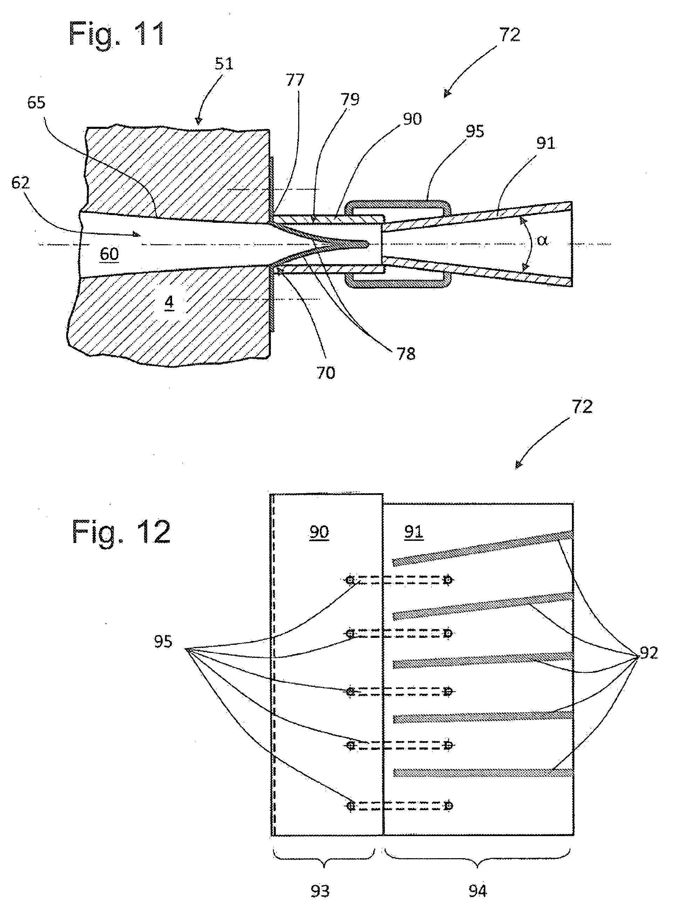

La sortie 62 de chaque canal 60 se termine par un ajutage 77 se présentant sous la forme d'une fente étroite, de largeur sensiblement constante, qui s'étend, selon une direction verticale, depuis le fond 63 jusqu'au sommet 64, le sommet 64 correspondant au niveau maximal atteint par les crêtes des vagues amplifiées. La largeur de l'ajutage 77 est de l'ordre de quelques dizaines de centimètres, par exemple d'environ 15 à 35 cm et a une hauteur de plusieurs mètres, par exemple de l'ordre de 12 m. Cet ajutage 77 est obturé, de façon sélective, par un clapet 70 représenté en détail sur la figure 11, connu en soi. En référence notamment à la figure 11, le clapet 70 comporte une ou plusieurs lattes 78, ou lèvres, de préférence souples et élastiquement déformables, par exemple réalisées en élastomère armé ou non. Ces lattes 78 sont de préférence prévues dans la continuité des parois latérales 65 rigides du canal 60 de manière à ne pas perturber l'entrée de l'eau et s'étendent de préférence sur toute la hauteur de l'ajutage 77. De manière générale, les lattes 78 doivent s'étendre au moins à un niveau supérieur à celui du niveau maximum de l'eau dans le réservoir 71. Dans l'exemple illustré, le clapet 70 comporte deux lattes 78 en élastomère situées en regard l'une de l'autre, fixées directement après l'ajutage 77 par tout moyen de fixation connus. Les lattes 78 sont ainsi disposées respectivement de chaque côté de cette fente. Chaque latte 78 a une largeur active au contact de l'eau supérieur à la largeur de l'ajutage 77 et de préférence comprise entre une à trois fois la largeur de l'ajutage 77. Les lattes 78 sont disposées de sorte à ce qu'au repos, lorsqu'elles ne sont pas soumises à l'effet d'une vague amplifiée, elles soient jointives et limitent le débit de retour à la mer. Le clapet 70 est ainsi adapté pour s'ouvrir dès que la pression dynamique est supérieure à la pression statique dans le réservoir 71. Lors du passage d'une vague les lattes 78 s'écartent ainsi élastiquement l'une de l'autre par l'écoulement de l'eau franchissant l'ajutage 77. Les lattes 78 se referment dés l'inversion du débit. La souplesse et l'élasticité des lattes 78 permettent au clapet 70 d'offrir le moins de résistance possible à l'ouverture et de se fermer rapidement pour limiter le débit de retour à la mer. Selon un mode de réalisation non représentée, les lattes peuvent être réalisées en matériau rigide, par exemple des battants métalliques, montés pivotants autour d'axes sensiblement verticaux et sollicités l'un vers l'autre par un ou plusieurs éléments de rappel élastiques tel que par exemple des ressorts. Le clapet 70 permet ainsi le passage de l'eau, dans un unique sens, depuis les canaux 60 jusqu'à un réservoir 71, dans lequel l'eau de mer est surélevée par rapport au niveau moyen de la mer M, de façon connue en soi. Le réservoir 71 et les canaux sont mis directement en communication par les clapets 70 ce qui limite toute perte de rendement.

Au voisinage du clapet 70, l'écoulement de l'eau n'est pas uniforme selon une direction verticale. Ainsi, la trajectoire de l'eau est horizontale vers le fond 63, alors qu'elle est de plus en plus inclinée en direction du sommet 54 du canal 60. Dans ces conditions, les lattes 78 peuvent être réalisées en plusieurs éléments successifs dans la hauteur, dont chacun assure un rôle de déflecteur, afin de guider l'eau selon un trajet le plus horizontal possible. Ce dernier agencement peut cependant induire des pertes de charge élevées. On utilise donc de préférence des lattes continues sur l'ensemble de la hauteur du clapet 70, tel que représenté. Les lattes peuvent par ailleurs avoir des caractéristiques différentes sur la hauteur pour présenter une rigidité dégressive sur la hauteur pour obtenir une flexibilité supérieure en partie haute du clapet 70. A cet effet, les lattes peuvent par exemple être renforcées en partie basse.

Etant donné que, en service, la vitesse de l'eau au travers du clapet 70 est très élevée, on prévoit avantageusement d'utiliser un diffuseur 72, qui permet de récupérer l'énergie cinétique de cet écoulement. En effet, pour la partie du clapet 70 immergée dans le réservoir 71, l'énergie cinétique du jet d'eau entrant dans le réservoir 71 est détruite par la turbulence générée par élargissement brusque. Cette énergie dissipée est proportionnelle à la puissance carrée de la vitesse d'entrée. Le but du diffuseur 72 est de récupérer une partie de cette énergie cinétique ainsi dissipée pour améliorer le rendement du dispositif I. D'une façon générale la récupération de l'énergie cinétique d'un fluide s'opère par ralentissement de l'écoulement dans un divergent qui doit être long et d'angle faible pour éviter tout décollement le long de la paroi. Le diffuseur 72 est prévu après le clapet 70 dans le sens d'entrée de l'eau. Il se présente par exemple sous la forme d'un caisson ouvert du coté du diffuseur et du coté du réservoir 71 et fixé à l'arrière de la paroi d'extrémité 4 par tout moyen connu. La largeur du diffuseur 72 à son entrée (coté clapet 70) est sensiblement égale à celle de l'ajutage 77. La continuité de l'écoulement entre l'ajutage 77 et le diffuseur 72 se fait par effacement des lattes 78 dans des logements 79 prévus de part et d'autre dans les parois latérales 90 d'une première portion 93 du diffuseur 72. Le diffuseur 72 comporte par ailleurs une seconde portion 94 dont les parois latérales 91 s'étendent sensiblement dans le prolongement des parois latérales 90 de la première portion 93, de préférence sur toute la hauteur de l'ajutage 77. Les parois latérales 91 s'écartent l'une de l'autre d'un angle α d'environ 7 degrés. Ce diffuseur 72 peut être cloisonné horizontalement, afin d'empêcher que des courants parasites ne se développent de bas en haut dans le réservoir 71. Ce cloisonnement est par exemple obtenu par des ailettes 92 prévues dans la seconde portion 94 du diffuseur 72. Ces ailettes 92 forment des toits qui canalisent le jet fractionné et empêchent le développement de courants parasites. Les ailettes 92 ont des lignes d'attaque sensiblement horizontales et sont sensiblement horizontales dans le fond du réservoir 71 et inclinées dans la partie supérieure du réservoir 71 du bas vers le haut dans le sens d'entrée de l'eau dans le réservoir 71. La première portion 93 et la seconde portion 94 du diffuseur 72 sont reliées par des conduits de circulation 95 les mettant en communication. Ces conduits de circulation 95 permettent d'une part, lors de la fermeture des lattes 78, d'empêcher qu'elles ne restent collées dans leurs logements par effet ventouse contre les parois latérales 90 et, d'autre part, lors de l'écartement des lattes 78, de chasser l'eau emprisonnée entre les lattes 78 et les parois latérales 90. Le rendement du dispositif I en est ainsi amélioré. Le réservoir 71 permet en outre la régularisation du débit de l'énergie, qu'apportent les vagues par intermittence du fait de leur caractère irrégulier. On peut ainsi prévoir d'utiliser des équipements, destinés à tranquilliser l'eau arrivant par giclées dans le réservoir 71. On notera également que, dans le cas où la place globale est limitée, on peut envisager de réaliser une partie du réservoir 71 directement au-dessus des canaux 60 convergents.

Ce réservoir 71 est propre à alimenter des moyens, reçus dans un puits 73, permettant de transformer en énergie électrique l'énergie potentielle de l'eau, placée en surélévation dans ce réservoir 71. Ces moyens, connus en tant que tels, sont représentés de façon schématique et sont affectés de la référence 74. Il s'agit par exemple de turbines « basse chute », de type hélices, qui sont associées à des équipements électromécaniques, non représentés, logés également dans le puits 73. Enfin, ces turbines sont pourvues d'aspirateurs 75, qui s'étendent au travers des échancrures 6 ménagées dans la paroi d'extrémité 4, appartenant à la structure fixe 1.

Comme cela apparaîtra plus clairement ci-après, la structure mobile 51 est susceptible de se déplacer verticalement, en service. Dans ces conditions, afin d'assurer un guidage entre les deux structures fixe 1 et mobile 51, tout en limitant leurs frottements mutuels, on peut avantageusement prévoir des éléments adaptés à ces fonctions. De tels éléments, réalisés par exemple en bronze ou en acier inoxydable, sont affectés de la référence 76 sur la figure 3, sur laquelle ils sont interposés ponctuellement entre les surfaces en regard des deux structures fixe 1 et mobile 51. Alternativement, l'une des surfaces en regard peut être munie de galets de roulement non représentés.

Le dispositif I conforme à l'invention comprend enfin une unité de commande 80, en relation avec les verrous 66 et les ballasts 53 via une ligne de commande 81. Cette unité de commande 80, illustrée de façon très schématique à la figure 4, peut par exemple être logée dans le local 40 visible à la figure 1. Elle reçoit diverses informations, relatives aux paramètres de la dynamique marine, tels ceux liés à la marée et aux vagues.

Ces informations comprennent tout d'abord les variations de la marée, qui sont connues pour un site donné, ainsi que d'autres données éventuelles concernant l'évolution dans le temps des paramètres de la houle, tels sa période Tp ou encore sa hauteur Hs. Afin d'accéder à ces données supplémentaires, on peut prévoir d'utiliser un capteur 82, tel une bouée placée au large, qui transmet les informations appropriées aux moyens de commande via une liaison 83.

La mise en oeuvre du dispositif I conforme à l'invention, décrit ci-dessus, va maintenant être explicitée dans ce qui suit.

De façon préférée, la structure mobile 51 est entièrement réalisée dans un chantier naval, où l'ensemble des équipements est mis en place. Cette structure mobile 51 de type flottant est alors déplacée, par flottaison, en direction de la structure fixe 1. On escamote les verrous 66 dans les encoches 5 ou 55, puis on introduit la structure mobile 51 entre les parois latérales 3 de la structure fixe 1. Enfin, une fois que la position souhaitée est atteinte, on déplace les verrous 66 de sorte que chacun d'eux pénètre dans les encoches 55, 5 respectivement en regard, ce qui immobilise mutuellement les deux structures fixe 1 et mobile 51 l'une par rapport à l'autre, dans un plan horizontal. Comme vu ci-dessus, ce verrouillage peut également assurer une immobilisation verticale entre ces structures fixe 1 et mobile 51.

On suppose ensuite que, dans une première phase de mise en oeuvre, le fond 63 de chaque canal 60 présente une cote verticale telle, qu'elle assure une profondeur d'eau satisfaisante dans les canaux 60 grâce éventuellement à l'ajustement de la ligne de flottaison à l'aide des ballasts 53. Cette situation est illustrée à la figure 7, où la cote du fond 63 de chaque canal 60, par rapport au fond F de la mer M, est référencée h1, le niveau de la mer M est référencé H1 et la profondeur d'eau dans le canal 60 est référencée P. Sur cette figure 7, tout comme sur la figure 8, le canal 60 est représenté de façon très schématique.

On suppose ensuite que le niveau de la mer augmente, sous l'effet de la marée, jusqu'à atteindre une valeur H2, supérieure à H1 selon une différence δH. Cette variation est intégrée dans l'unité de commande 80, laquelle ordonne un déblocage des verrous 66, si ces derniers immobilisent mutuellement les deux structures fixe 1 et mobile 51, dans la direction verticale. Cette situation est illustrée à la figure 8.

De la sorte, la structure mobile 51 s'élève sous l'effet de la force d'Archimède par rapport à la structure fixe 1 selon la flèche F1, également d'une valeur de δH. Si les verrous 66 ont été précédemment débloqués, ils sont alors à nouveau actionnés. Le fond 63 des canaux 60 est ainsi à une cote h2, égale à la somme h1+ δH, de sorte que la profondeur d'eau dans les canaux reste voisine de la valeur optimale P. Alternativement, le même effet d'élévation de la structure mobile 51 par rapport à la structure fixe 1 peut être obtenu à l'aide des contrepoids 8 et des systèmes de renvoi 9. Dans ce cas la masse de la structure mobile 51, supérieure à celles des contrepoids 8, assurera une prépondérance à la descente, réglable ou non à l'aide des ballasts.

Bien évidemment, si la marée est descendante, une descente de la structure mobile 51 sera provoquée. Ainsi, grâce à l'invention, le fond de chaque canal 60 est susceptible de « suivre » le niveau de la mer, de façon à conserver une profondeur d'eau globalement constante dans les canaux 60.

Cet ajustement de la ligne de flottaison de la structure mobile 51, décrit aux deux paragraphes précédents, peut être mis en oeuvre continûment ou à intervalles réguliers, sans à-coups grâce au desserrage contrôlé des verrous 66.

Dans le cas où l'unité de commande 80 reçoit des informations supplémentaires par les capteurs, cet ajustement peut prendre en compte non seulement les variations de la marée, mais aussi d'éventuelles modifications des autres paramètres évoqués ci-dessus. Ainsi, à titre d'exemple, si la hauteur Hs de la houle diminue, il conviendra de diminuer la profondeur P. Cette diminution est intégrée dans l'unité de commande 80, laquelle ordonne un vidage des ballasts et un déblocage des verrous 66, si ces derniers immobilisent mutuellement les deux structures fixe 1 et mobile 51, dans la direction verticale. De la sorte, la structure mobile 51 s'élève sous l'effet de la force d'Archimède par rapport à la structure fixe 1, jusqu'à atteindre la valeur de profondeur considérée optimale.

Une maintenance complète de la structure mobile 51 peut être réalisée, en extrayant celle-ci hors de la structure fixe 1 après déblocage des verrous 66, puis en la dirigeant par flottaison vers un port. On peut également procéder au levage sur site de cette structure mobile 51, à l'aide d'un système approprié associé aux contrepoids 8 après vidage complet préalable des ballasts.

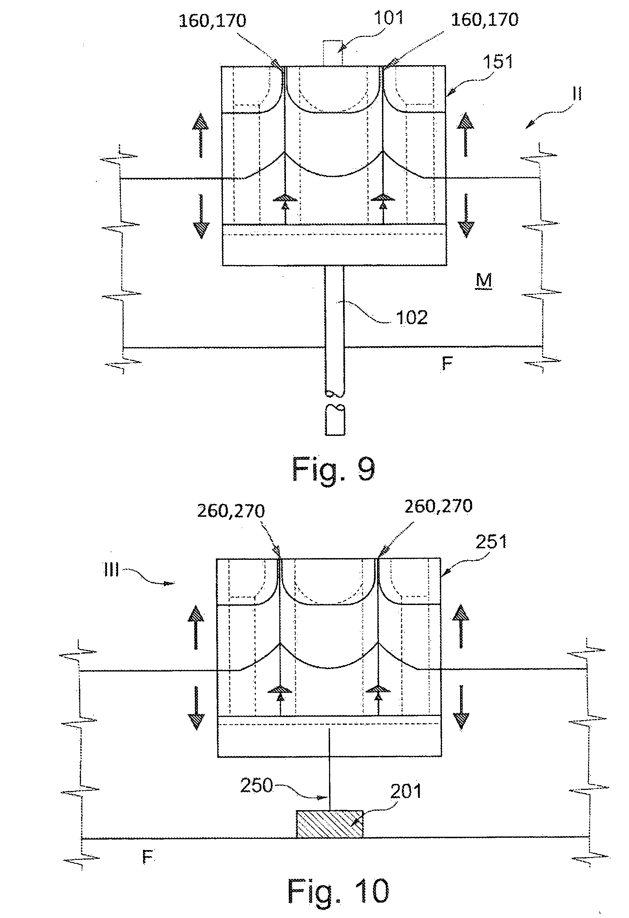

La figure 9 illustre un second mode de réalisation de l'invention. Sur cette figure, les éléments mécaniques analogues à ceux des figures 1 à 8, 11 et 12 y sont affectés des mêmes numéros de référence, augmentés de 100.

Dans ce second mode, le dispositif Il intègre une structure fixe 101 porteuse, qui comprend un pieu de guidage 102, fondé sur le fond F de la mer M par tout moyen approprié. Une telle structure est donc de type « offshore », installée à distance de la côte.

Par ailleurs, la structure mobile 151 est analogue à celle 51 décrite ci-dessus, notamment en ce qui concerne les canaux 160, les clapets 170, le réservoir et les turbines, ainsi que les ballasts. Ces différents organes mécaniques ne sont d'ailleurs pas représentés en détail sur cette figure 9. Les critères gouvernant le guidage et le verrouillage en position de la structure mobile 151, ainsi que le procédé de pilotage du déplacement de cette dernière, sont similaires à ceux décrits ci-dessus en référence au premier mode de réalisation.

Dans les deux modes de réalisation ci-dessus, l'ensemble des canaux 60, 160 appartient à une structure mobile 51 151. Cependant, à titre d'alternative, on peut prévoir tout d'abord que la structure fixe englobe les parois latérales des canaux, auquel cas le fond et le clapet sont mobiles verticalement par rapport à ces parois. Selon une variante supplémentaire, cette structure fixe englobe non seulement les parois latérales mais aussi le clapet, de sorte que seul le fond est mobile verticalement.

La figure 10 illustre un mode de réalisation supplémentaire de l'invention. Sur cette figure, les éléments mécaniques analogues à ceux des figures 1 à 8, 11 et 12 y sont affectés des mêmes numéros de référence, augmentés de 200.

Dans ce troisième mode, le dispositif III comprend une structure mobile 251, analogue à l'une ou l'autre des structures 51 et 151 décrites ci-dessus. Cette structure mobile 251, flottante, est amarrée au fond F de la mer M grâce à une ou plusieurs ligne(s) de maintien 250, de type approprié, qui est (sont) solidarisée(s) à un corps mort 201. Ce dernier, qui repose contre le fond F de la mer M, forme donc une structure fixe 201. La structure mobile 251 est par conséquent flottante, à la façon d'une barge, de sorte que le fond des canaux 260 présente une cote verticale variable par rapport au fond F de la mer M et la hauteur d'eau dans le canal 260 reste sensiblement constante, en suivant les fluctuations de la marée.

Cette structure mobile 251 peut être dépourvue de ballasts, tels ceux 53 des figures 1 à 8, auquel cas son mouvement est uniquement imparti par celui de la marée. A titre de variante on peut prévoir d'utiliser ces ballasts, ou tout autre système équivalent, afin de modifier la ligne de flottaison de la structure. Ceci permet de prendre en compte des paramètres des vagues, tels que la période et/ou la hauteur, comme explicité ci-dessus.

Un dispositif I, II, III de récupération d'énergie, tel que décrit dans l'un ou l'autre des modes de réalisation précédents, peut former un module élémentaire, susceptible d'être associé à d'autres modules identiques. Il est alors possible de former une usine de récupération d'énergie, à partir de plusieurs de ces modules, en fonction de la puissance électrique totale souhaitée. Une telle usine se présente donc comme un ouvrage modulaire développé en longueur perpendiculairement à la direction principale de propagation des vagues. Son efficacité peut être significativement augmentée par concentration des vagues immédiatement en amont, soit à l'aide de guideaux latéraux, soit par réfraction de la houle à l'aide d'obstacles immergés en avant de l'installation.

Dans les modes de réalisation ci-dessus, le dispositif I, II, III conforme à l'invention comprend deux canaux 60, 160, 260 convergents, placés côte à côte. Cependant, on peut prévoir de faire appel à un unique canal convergent, ou au contraire à plusieurs de ces canaux, qui peuvent être prévus au nombre de trois ou plus.

Dans tous les modes de réalisation décrits ci-dessus, on peut associer une ou plusieurs éoliennes au dispositif I, II, III ou à l'usine de récupération d'énergie. Ceci permet de mutualiser l'équipement électrique de puissance et le raccordement au réseau électrique.

Dans les solutions de type plateforme offshore et barge flottante, la partie d'énergie qui passe sous la structure mobile 151, 251 est perdue. Il est donc avantageux que le tirant d'eau de cette structure mobile 151, 251 soit suffisamment important, afin de limiter la quantité d'énergie non captée.

L'ensemble du dispositif I, II, III de l'invention est massif, de sorte qu'il présente de bonnes dispositions à survivre aux fortes tempêtes. Différents organes auxiliaires pourront être prévus pour aider à la maintenance, tels une vanne d'isolement à l'entrée du canal 60, ou un caisson flottant assurant la même fonction, ou encore des organes de manutention.

Si des corps flottants sont apportés par les vagues, il est avantageux de les arrêter avant qu'ils n'atteignent le clapet 70. A cet effet, on peut interposer une grille, laquelle ne comporte ni entretoise, ni poutre horizontale, afin de ne pas perturber les vagues. Une telle grille peut être constituée de barreaux verticaux tendus à l'aide de tirants prenant appui sur le fond de la structure mobile 51, 151, 251, ainsi que d'une traverse supérieure, placée au dessus du niveau de l'eau.

Les formes et dimensions du ou de chaque canal 60 convergent permettent avantageusement :
- de limiter la réflexion des vagues vers le large ;
- de réaliser un ouvrage le plus compact possible pour des raisons de coût et de résistance aux plus fortes vagues ;
- de conserver un rendement de récupération acceptable sur une large gamme de vagues définies notamment par leur période Tp et leur hauteur Hs ;
- de prévenir le fonctionnement « en seiche » qui provoque un balancement dans le canal 60 sans pratiquement d'écoulement dans le clapet 70.

On donne ci-après, à titre d'exemple non limitatif, des caractéristiques avantageuses des différents éléments constitutifs de l'invention, tant en termes de structure que de procédé.

Le talus 10, faisant le raccordement avec l'extrémité libre du fond 63 peut avoir une pente de l'ordre de 2/1, si possible sans point anguleux au raccordement avec ce fond 63.

Pour limiter au maximum la réflexion des vagues, les parois du canal 60, 160, 260 convergent sont convexes avec une section horizontale en forme de trompette (par exemple courbes logarithmiques ou hyperboliques) avec convergence proche de zéro en bout de canal 60, 160, 260, à savoir à proximité du clapet 70, 170, 270.

A titre d'exemple uniquement, les caractéristiques relatives à ce profil et à une houle de conception d'une hauteur de 3 mètres et d'une période de 10 secondes, peuvent être les suivantes:
- profondeur d'eau dans le canal 60, 160, 260, prise à partir du fond : environ 4 mètres ;
- longueur du canal 60, 160, 260 : environ 25 mètres ;
- ouverture du canal 60, 160, 260 à la mer : environ 10 mètres ;
- largeur du clapet 70, 170, 270 : environ 20 cm ;
- hauteur de refoulement dans le réservoir 71 : environ 6 mètres.

La convergence presque nulle en fond de canal 60, 160, 260 permet de limiter le rejaillissement d'eau en partie haute du clapet 70, 170, 270. De cette façon, l'effet d'amplification cesse pratiquement en fond de canal 60, 160, 260, de sorte qu'on évite de faire monter l'eau plus haut que nécessaire.

Les caractéristiques géométriques optimales du canal 60, 160, 260 sont définies par rapport à la gamme de vagues que l'on souhaite exploiter, par exemple celles dont la hauteur est comprise entre 1.5 et 3 mètres (houle de conception). Dans ce cas, l'installation sera à l'arrêt pour les vagues inférieures à 1.5 mètre, car l'énergie à extraire est faible. En revanche, la puissance de l'installation sera plafonnée pour les vagues supérieures à 3 mètres, car ces dernières ont une fréquence d'apparition trop faible pour justifier un tel accroissement de la puissance, lequel s'accompagne d'un surcoût sensible.

### Possibilités d'application industrielle

Comme détaillé précédemment, le dispositif I, II, III selon l'invention peut être exploité selon différentes configurations d'utilisation (encastrement dans une digue, barge flottante) afin d'amplifier des vagues pour accumuler l'eau à plusieurs mètres au-dessus du niveau moyen de la mer, dans un réservoir 71 duquel on récupère l'énergie potentielle de l'eau.

## Revendications

1. Dispositif (I ; II ; III) de récupération de l'énergie des vagues, comprenant au moins un canal (60 ; 160 ; 260) d'amplification de la hauteur des vagues, ledit canal (60 ; 160 ; 260) étant ouvert vers le haut et comprenant une entrée (61), un fond (63) et une sortie (62) débouchant dans un clapet (70 ; 170 ; 270), ladite entrée (61) et ladite sortie (62) étant reliées par des parois latérales (65), la dimension transversale dudit canal (60 ; 160 ; 260) entre lesdites parois latérales (65) diminuant vers ladite sortie (62), ledit dispositif (I ; II ; III) comprenant en outre au moins un réservoir (71) de stockage d'eau, mis en communication directe avec ledit canal (60 ; 160 ; 260) par ledit clapet (70 ; 170 ; 270), ainsi que des moyens (74) de transformation de l'énergie potentielle de l'eau stockée dans ledit réservoir (71), en énergie électrique,
lesdites parois latérales (65) convergentes étant convexes avec une section horizontale en forme de trompette, de préférence selon une courbe logarithmique ou hyperbolique, ledit canal (60 ; 160 ; 260) se terminant par un ajutage (77) se présentant sous la forme d'une fente étroite s'étendant en direction verticale depuis le fond (63) jusqu'audit sommet (64) dudit canal (60 ; 160 ; 260), ledit ajutage (77) étant fermé par ledit clapet (70 ; 170 ; 270) agencé pour s'ouvrir dès que la pression dynamique de l'eau se présentant à l'entrée dudit clapet (70 ; 170 ; 270) est supérieure à la pression statique dans ledit réservoir (71) et à se refermer dés l'inversion du débit d'eau, en ce que ledit clapet (70 ; 170 ; 270) comporte au moins une lèvre souple et élastiquement déformable prévue dans la continuité desdites parois latérales (65) rigides dudit canal (60) de manière à ne pas perturber l'entrée de l'eau dans ledit réservoir (71),
le dispositif étant **caractérisé en ce qu'**il comprend
- une structure fixe (1 ; 101 ; 201), immobile par rapport au fond (F) de la mer (M), ainsi que
- une structure mobile (51 ; 151 ; 251), propre à être déplacée par rapport à ladite structure fixe (1 ; 101 ; 201) au moins selon la direction verticale, ladite structure mobile (51 ; 151 ; 251) comportant au moins ledit fond (63) dudit canal (60 ; 160 ; 260) ainsi mobile, au moins selon une direction verticale, par rapport au fond (F) de la mer (M),
**en ce que** ledit clapet (70 ; 170 ; 270) est couplé à au moins un diffuseur (72) prévu dans ledit réservoir (71) et comportant des parois latérales (90) s'écartant l'une de l'autre d'un angle α compris entre 5 et 7 degrés, ledit diffuseur (72) étant agencé pour récupérer l'énergie cinétique de l'écoulement au travers dudit clapet (70 ; 170 ; 270) pour lequel la vitesse de l'eau est très élevée en ralentissant l'écoulement afin d'améliorer le rendement dudit dispositif (I ; II ; III), et **en ce que** ledit dispositif (I ; II ; III) comprend en outre des moyens de commande (80), propres à commander le déplacement du fond (63) de chaque canal (60 ; 160 ; 260) selon la direction verticale, et propre à être mis en communication avec des moyens (82) de fourniture d'au moins un paramètre de la dynamique marine, choisi dans le groupe comprenant au moins le niveau de la marée et les paramètres de la houle, tels que la hauteur (Hs) des vagues, la période (Tp) des vagues.

2. Dispositif (I ; II ; III) selon la revendication **1, caractérisé en ce que** ladite structure mobile (51 ; 151 ; 251) comprend, outre ledit fond (63), ledit clapet (70 ; 170 ; 270), ledit réservoir (71) et lesdits moyens de transformation (74).

3. Dispositif (I ; II ; III) selon la revendication 2, **caractérisé en ce que** ladite structure mobile (51 ; 151 ; 251) comprend au moins un ballast (53), propre à être rempli ou vidé, en vue du déplacement de cette structure mobile (51 ; 151 ; 251) selon la direction verticale.

4. Dispositif (I ; II ; III) selon l'une des revendications précédentes, **caractérisé en ce que** lesdites parois latérales (65) ont une convergence proche de zéro en bout dudit canal (60 ; 160 ; 260), à proximité dudit clapet (70 ; 170 ; 270).

5. Dispositif (I) selon l'une des revendications précédentes, **caractérisé en ce que** ledit fond (63) possède une partie principale (63₁), adjacente audit clapet (70), qui est sensiblement horizontale et une extrémité libre (63₂) qui plonge dans une cavité (11) ménagée dans la structure fixe (1) pour limiter les sous-pressions induites par la houle sous le fond (63), tout en empêchant le passage de rebuts transportés par la mer sous la structure mobile (51 ; 151).

6. Dispositif (I) selon l'une des revendications précédentes, **caractérisé en ce que** ledit clapet (70 ; 170 ; 270) comporte au moins une latte (78) prévue sensiblement dans la continuité d'au moins une desdites parois latérales (65) dudit canal (60 ; 160 ; 260), ladite latte (78) s'étendant au moins à un niveau supérieur à celui du niveau maximum de l'eau dans ledit réservoir (71).

7. Dispositif (I ; II ; III) selon l'une des revendications précédentes, **caractérisé en ce que** ledit ajutage (77) a une largeur sensiblement constante sur toute sa hauteur, ladite largeur étant de l'ordre de quelques dizaines de centimètres, par exemple d'environ 15 à 35 cm, ladite hauteur étant de plusieurs mètres, par exemple de plus de 10 m.

8. Dispositif (I ; II ; III) selon l'une des revendications précédentes, **caractérisé en ce que** ledit clapet (70 ; 170 ; 270) comporte au moins deux lattes (78) prévues en regard l'une de l'autre de part et d'autre dudit ajutage (77), chaque latte (78) ayant une largeur active au contact de l'eau supérieur à la largeur dudit ajutage (77) et de préférence comprise entre une à trois fois la largeur de dudit ajutage (77).

9. Dispositif (I ; II ; III) selon la revendication précédente, **caractérisé en ce que** lesdites parois latérales (90) sont reliées entre elles par des ailettes (92) ayant des lignes d'attaque sensiblement horizontales, l'ailette (92) la plus proche du fond dudit réservoir (71) étant sensiblement horizontale, les ailettes (92) suivantes étant inclinées progressivement de plus en plus vers le haut dudit réservoir (71), l'inclinaison étant prévue du bas vers le haut dans le sens d'entrée de l'eau dans ledit réservoir (71).

10. Dispositif (1 ; II ; III) selon les revendications 8 et 9, **caractérisé en ce que** ledit diffuseur (72) comporte une première portion (93) apte à recevoir ladite latte (78) écartée et une seconde portion (94) prévue au-delà de la dite première portion (93) dans le sens d'entrée de l'eau dans ledit réservoir (11), lesdites première et seconde portions (93, 94) étant reliées entre-elles par des conduits de circulation (95) les mettant en communication.

11. Ensemble de récupération de l'énergie des vagues, **caractérisé en ce qu'**il comprend au moins deux dispositifs (I ; I ; III) de récupération d'énergie selon l'une quelconque des revendications précédentes, ces dispositifs (I ; I ; III) étant placés côte à côte.

12. Procédé de récupération de l'énergie des vagues au cours duquel on amplifie dans un canal (60 ; 160 ; 260) d'amplification la hauteur des vagues, on fait déboucher, directement par l'intermédiaire d'un clapet (70 ; 170 ; 270), la vague ainsi amplifiée dans un réservoir (71) de stockage d'eau, on transforme l'énergie potentielle de l'eau stockée dans ledit réservoir (71), en énergie électrique, on utilise un canal (60 ; 160 ; 260) se terminant par un ajutage (77) se présentant sous la forme d'une fente étroite s'étendant en direction verticale depuis le fond (63) dudit canal (60 ; 160 ; 260) jusqu'audit sommet (64) dudit canal (60 ; 160 ; 260), on utilise un clapet (70 ; 170 ; 270) pour fermer ledit ajutage (77), on utilise un clapet (70 ; 170 ; 270) comportant au moins une lèvre souple et élastiquement déformable que l'on prévoit dans la continuité desdites parois latérales (65) rigides dudit canal (60) de manière à ne pas perturber l'entrée de l'eau dans ledit réservoir (71),
**caractérisé en ce que** l'on utilise au moins un dispositif (I, II, III) selon l'une des revendications 1 à 10,
**en ce que** l'on prévoit, dans ledit réservoir (71), au moins un diffuseur (72) comportant des parois latérales (90) s'écartant l'une de l'autre d'un angle α compris entre 5 et 7 degrés, **en ce que** l'on utilise ledit diffuseur pour récupérer l'énergie cinétique de l'écoulement au travers dudit clapet (70 ; 170 ; 270) pour lequel la vitesse de l'eau est très élevée en ralentissant l'écoulement afin d'améliorer le rendement dudit dispositif (I ; II ; III), et **en ce que** l'on règle la hauteur de ladite structure mobile (51 ; 151 ; 251), par rapport audit fond (F) de la mer (M) en fonction d'au moins un paramètre de la dynamique marine, choisi dans le groupe comprenant au moins le niveau de la marée et les paramètres de la houle, tels que la hauteur (Hs) des vagues, la période (Tp) des vagues.

## Patentansprüche

1. Vorrichtung (I; II; III) zur Gewinnung von Wellenenergie, umfassend mindestens einen Kanal (60; 160; 260) zur Verstärkung der Höhe der Wellen, wobei der Kanal (60; 160; 260) nach oben hin offen ist und einen Eingang (61), einen Boden (63) und einen Ausgang (62) umfasst, der in einer Klappe (70; 170; 270) mündet, wobei der Eingang (61) und der Ausgang (62) durch Seitenwände (65) verbunden sind, wobei die Querabmessung des Kanals (60; 160; 260) zwischen den Seitenwänden (65) zum Ausgang (62) hin abnimmt, wobei die Vorrichtung (I; II; III) ferner mindestens einen Wasserspeicherbehälter (71) umfasst, der direkt mit dem Kanal (60; 160; 260) über die Klappe (70; 170; 270) in Verbindung steht, sowie Mittel (74) zur Umwandlung der potentiellen Energie des in dem Behälter (71) gespeicherten Wassers in elektrische Energie, wobei die konvergierenden Seitenwände (65) konvex sind, mit einem horizontalen Querschnitt in Trompetenform, vorzugsweise gemäß einer logarithmischen oder hyperbolischen Kurve, wobei der Kanal (60; 160; 260) mit einem Anschlussstück (77) endet, der in Form eines schmalen Schlitzes vorhanden ist, der sich in Vertikalrichtung vom Boden (63) bis zur Spitze (64) des Kanals (60; 160; 260) erstreckt, wobei das Anschlussstück (77) durch die Klappe (70; 170; 270) verschlossen ist, die derart angeordnet ist, dass sie sich öffnet, wenn der dynamische Druck des Wassers, das am Eingang der Klappe (70; 170; 270) vorhanden ist, größer als der statische Druck in dem Behälter (71) ist, und dass sie sich bei Umkehr der Wassermenge schließt, wobei die Klappe (70; 170; 270) mindestens eine flexible und elastisch verformbare Lippe umfasst, die in der Verlängerung der starren Seitenwände (65) des Kanals (60) vorgesehen ist, um den Wassereintritt in den Behälter (71) nicht zu stören, wobei die Vorrichtung **dadurch gekennzeichnet ist, dass** sie umfasst:
- eine feste Struktur (1; 101; 201), die in Bezug zum Boden (F) des Meeres (M) unbeweglich ist, sowie
- eine bewegliche Struktur (51; 151; 251), die dazu geeignet ist, in Bezug zu der festen Struktur (1; 101; 201) zumindest in Vertikalrichtung verschoben zu werden, wobei die bewegliche Struktur (51; 151; 251) mindestens den Boden (63) des Kanals (60; 160; 260) umfasst, der so zumindest in Vertikalrichtung in Bezug zum Boden (F) des Meeres (M) beweglich ist,
dass die Klappe (70; 170; 270) mit mindestens einem Diffusor (72) gekoppelt ist, der in dem Behälter (71) vorgesehen ist, und umfassend Seitenwände (90), die sich voneinander um einen Winkel α zwischen 5 und 7 Grad entfernen, wobei der Diffusor (72) derart angeordnet ist, dass er die kinetische Energie des Stroms durch die Klappe (70; 170; 270), für den die Geschwindigkeit des Wassers sehr hoch ist, wiedergewinnt, wobei der Strom verlangsamt wird, um die Leistung der Vorrichtung (I; II; III) zu verbessern, und dass die Vorrichtung (I; II; III) ferner Steuermittel (80) umfasst, die geeignet sind, die Verschiebung des Bodens (63) jedes Kanals (60; 160; 260) in Vertikalrichtung zu steuern und mit Mitteln (82) zur Lieferung mindestens eines Parameters der Meeresdynamik in Verbindung gebracht zu werden, der aus der Gruppe, umfassend mindestens die Höhe von Ebbe und Flut und die Parameter des Seegangs, wie die Höhe (Hs) der Wellen, die Periode (Tp) der Wellen, ausgewählt wird.

2. Vorrichtung (I; II; III) nach Anspruch 1, **dadurch gekennzeichnet, dass** die bewegliche Struktur (51; 151; 251) außer dem Boden (63) die Klappe (70; 170; 270), den Behälter (71) und die Umwandlungsmittel (74) umfasst.

3. Vorrichtung (I; II; III) nach Anspruch 2, **dadurch gekennzeichnet, dass** die bewegliche Struktur (51; 151; 251) mindestens eine Ballast (53) umfasst, die geeignet ist, im Hinblick auf die Verschiebung dieser beweglichen Struktur (51; 151; 251) in Vertikalrichtung gefüllt oder geleert zu werden.

4. Vorrichtung (I; II; III) nach einem der vorhergehenden Ansprüche, **dadurch gekennzeichnet, dass** die Seitenwände (65) eine Konvergenz nahe Null am Ende des Kanals (60; 160; 260) in der Nähe der Klappe (70; 170; 270) haben.

5. Vorrichtung (I) nach einem der vorhergehenden Ansprüche, **dadurch gekennzeichnet, dass** der Boden (63) einen Hauptteil (63₁), der an die Klappe (70) angrenzt, der im Wesentlichen horizontal ist, und ein freies Ende (63₂) besitzt, das in einen Hohlraum (11), der in der festen Struktur (1) ausgenommen ist, eintaucht, um den durch den Seegang unter dem Boden (63) hervorgerufenen Unterdruck zu begrenzen, wobei der Durchgang von Abfall, der vom Meer transportiert wird, unter der beweglichen Struktur (51; 151) verhindert wird.

6. Vorrichtung (I) nach einem der vorhergehenden Ansprüche, **dadurch gekennzeichnet, dass** die Klappe (70; 170; 270) mindestens eine Latte (78) umfasst, die im Wesentlichen in der Verlängerung mindestens einer der Seitenwände (65) des Kanals (60; 160; 260) vorgesehen ist, wobei sich die Latte (78) zumindest auf einem höheren Niveau als jenem des maximalen Niveaus des Wassers in dem Behälter (71) erstreckt.

7. Vorrichtung (I; II; III) nach einem der vorhergehenden Ansprüche, **dadurch gekennzeichnet, dass** Anschlussstück (77) eine im Wesentlichen kontante Breite auf seiner gesamten Höhe hat, wobei die Breite ungefähr einige Dutzend Zentimeter, beispielsweise ungefähr 15 bis 35 cm, beträgt, wobei die Höhe mehrere Meter, beispielsweise mehr als 10 m, beträgt.

8. Vorrichtung (I; II; III) nach einem der vorhergehenden Ansprüche, **dadurch gekennzeichnet, dass** die Klappe (70; 170; 270) mindestens zwei Latten (78) umfasst, die einander gegenüberliegend beiderseits des Anschlussstücks (77) vorgesehen sind, wobei jede Latte (78) eine aktive Breite im Kontakt mit dem Wasser hat, die größer als die Breite des Anschlussstücks (77) ist und vorzugsweise zwischen ein- und dreimal die Breite des Anschlussstücks (77) beträgt.

9. Vorrichtung (I; II; III) nach dem vorhergehenden Ansprüche, **dadurch gekennzeichnet, dass** die Seitenwände (90) miteinander durch Lamellen (92) verbunden sind, die im Wesentlichen horizontale Angriffslinien haben, wobei die nächste Lamelle (92) zum Boden des Behälters (71) im Wesentlichen horizontal ist, wobei die folgenden Lamellen (92) nach und nach immer mehr nach oben zum Behälter (71) geneigt sind, wobei die Neigung von unten nach oben in Eintrittsrichtung des Wassers in den Behälter (71) vorgesehen ist.

10. Vorrichtung (I; II; III) nach den Ansprüchen 8 und 9, **dadurch gekennzeichnet, dass** der Diffusor (72) einen ersten Abschnitt (93) umfasst, der geeignet ist, die beabstandete Latte (78) aufzunehmen, und einen zweiten Abschnitt (94), der über dem ersten Abschnitt (93) in Eintrittsrichtung des Wassers in den Behälter (11) vorgesehen ist, wobei der erste und der zweite Abschnitt (93, 94) miteinander durch Zirkulationsleitungen (95), die sie in Verbindung bringen, verbunden sind.

11. Einheit zur Wiedergewinnung der Energie der Wellen, **dadurch gekennzeichnet, dass** sie mindestens zwei Vorrichtungen (I; II; III) zur Wiedergewinnung von Energie nach einem der vorhergehenden Ansprüche umfasst, wobei diese Vorrichtungen (I; II; III) nebeneinander angeordnet sind.

12. Verfahren zur Wiedergewinnung der Energie der Wellen, während dessen in einem Verstärkungskanal (60; 160; 260) die Höhe der Wellen verstärkt wird, direkt über eine Klappe (70; 170; 270) die so verstärkte Welle in einen Wasserspeicherbehälter (71) eingeleitet wird, die potentielle Energie des in dem Behälter (71) gespeicherten Wassers in elektrische Energie umgewandelt wird, ein Kanal (60; 160; 260) verwendet wird, der mit einem Anschlussstück (77) endet, das in Form eines schmalen Schlitzes vorhanden ist, der sich in Vertikalrichtung vom Boden (63) des Kanals (60; 160; 260) bis zur Spitze (64) des Kanals (60; 160; 260) erstreckt, eine Klappe (70; 170; 270) verwendet wird um das Anschlussstück (77) zu verschließen, eine Klappe (70; 170; 270) verwendet wird, umfassend mindestens eine flexible und elastisch verformbare Lippe, die in der Verlängerung der starren Seitenwände (65) des Kanals (60) vorgesehen ist, um den Eintritt des Wassers in den Behälter (71) nicht zu stören, **dadurch gekennzeichnet, dass** mindestens eine Vorrichtung (I; II; III) nach einem der Ansprüche 1 bis 10 verwendet wird, dass in dem Behälter (71) mindestens ein Diffusor (72) vorgesehen ist, umfassend Seitenwände (90), die sich voneinander um einen Winkel α zwischen 5 und 7 Grad entfernen, dass der Diffusor verwendet wird, um die kinetische Energie des Stroms durch die Klappe (70; 170; 270), für den die Geschwindigkeit des Wassers sehr hoch ist, wiederzugewinnen, wobei der Strom verlangsamt wird, um die Leistung der Vorrichtung (I; II; III) zu verbessern, und dass die Höhe der beweglichen Struktur (51; 151; 251) in Bezug zum Boden (F) des Meeres (M) in Abhängigkeit von mindestens einem Parameter der Meeresdynamik eingestellt wird, der in der Gruppe, umfassend mindestens die Höhe von Flut und Ebbe und die Parameter des Seegangs, wie die Höhe (Hs) der Wellen, die Periode (Tp) der Wellen, ausgewählt wird.

## Claims

1. Device (I; II, III) for recovering wave energy, comprising at least one channel (60, 160, 260) for amplifying the wave height, said channel (60, 160, 260) being open upwardly and comprising an inlet (61), a bottom (63) and an outlet (62) opening into a valve (70, 170, 270), said inlet (61) and said outlet (62) being connected by side walls (65), the transverse size of said channel (60, 160, 260) between said side walls (65) decreasing towards said output (62), said device (I, II, III) further comprising at least one reservoir (71) for storing water, placed in direct communication with said channel (60, 160, 260) by said valve (70; 170, 270), and means (74) for converting the potential energy of the water stored in said reservoir (71), into electrical energy, said converging side walls (65) being convex with a horizontal section in the shape of a trumpet, preferably according to a logarithmic or hyperbolic curve, said channel (60, 160, 260) terminating in a nozzle (77) being in the form of a narrow slit extending in the vertical direction from the bottom (63) to said top (64) of said channel (60, 160, 260), said nozzle (77) being closed by said valve (70, 170, 270) arranged to be opened when the dynamic pressure of the water at the input of said valve (70; 170, 270) is greater than the static pressure in said reservoir (71) and to be closed when the water flow is reversed, in that said valve (70, 170, 270) comprises at least one flexible and elastically deformable lip provided continuous to said rigid side walls (65) of said channel (60) so as not to disturb the entrance of water into said reservoir (71), the device being **characterized in that** it comprises a fixed structure (1, 101, 201), stationary with respect to the bottom (F) of the sea (M), and a movable structure (51, 151, 251) adapted to be moved relative to said fixed structure (1, 101, 201) at least in the vertical direction, the movable structure (51, 151, 251) comprising at least said bottom (63) of said channel (60, 160, 260) movable at least in a vertical direction, relative to the bottom (F) of the sea (M), and **in that** said valve (70, 170, 270) is coupled to at least one diffuser (72) provided in said reservoir (71) and comprising side walls (90) moving away from one another by an angle α of between 5 and 7 degrees, said diffuser (72) being provided to recover kinetic energy of the flow through the valve (70, 170, 270), for which the speed of the water is very high, in slowing the flow to improve the efficiency of said device (I, II, III), and **in that** said device (I, II, III) further comprises control means (80) adapted to control the displacement of the bottom (63) of each channel (60, 160, 260) in the vertical direction, and adapted to communicate with supplying means (82) of at least one dynamic parameter of the marine, selected from the group comprising at least the tide level and the swell parameters, such as wave height (Hs) and wave period (Tp).

2. Device (I; II, III) according to claim 1, **characterized in that** said mobile structure (51, 151, 251) comprises, apart from said bottom (63), said valve (70, 170, 270), said reservoir (71) and said converting means (74).

3. Device (I, II; III) according to claim 2, **characterized in that** said mobile structure (51, 151, 251) comprises at least one ballast (53), adapted to be filled or emptied, for the displacement of this movable structure (51, 151, 251) in the vertical direction.

4. Device (I, II, III) according to one of the preceding claims, **characterized in that** said side walls (65) have a convergence near zero at the end of said channel (60, 160, 260) close to said valve (70, 170, 270).

5. Device (I) according to one of the preceding claims, **characterized in that** said bottom (63) has a main portion (63₁) close to said valve (70) which is substantially horizontal and a free end (63₂) which plunges in a cavity (11) formed in the fixed structure (1) for limiting the sub-pressure swell-induced in the bottom (63) while preventing the passage of waste transported by the sea under the mobile structure (51, 151).

6. Device (I) according to one of the preceding claims, **characterized in that** said valve (70; 170, 270) comprises at least one slat (78) provided substantially in the continuity of at least one of said side walls (65) of said channel (60, 160, 260), said slat (78) extending at least to a level higher than the maximum water level in said reservoir (71)

7. Device (I, II, III) according to one of the preceding claims, **characterized in that** said nozzle (77) has a substantially constant width over its entire height, said width being of the order of a few tens of centimeters, for example about 15 to 35 cm, said height being of several meters, for example more than 10 m.

8. Device (I, II, III) according to one of the preceding claims, **characterized in that** said valve (70, 170, 270) comprises at least two slats (78) provided facing each other of both sides of said nozzle (77), each slat (78) having an effective width in contact with the water greater than the width of said nozzle (77) and preferably comprised between one and three times the width of said nozzle (77).

9. Device (I, II; III) according to the preceding claim, **characterized in that** said side walls (90) are interconnected by fins (92) having substantially horizontal driving lines, the fin (92) the nearest of the bottom of said reservoir (71) being substantially horizontal, the following fins (92) being progressively increasingly inclined upwardly from said reservoir (71), the inclination being provided from bottom to top in the inlet direction of the water in said reservoir (71).

10. Device (I, II; III) according to claims 8 and 9, **characterized in that** said diffuser (72) comprises a first portion (93) adapted to receive said spaced slat (78) and a second portion (94) provided beyond said first portion (93) in the inlet direction of the water in said reservoir (11), said first and second portions (93, 94) being connected together by flow conduits (95) to communicate.

11. Wave energy recovery assembly, **characterized in that** it comprises at least two devices (I, II, III) for recovering energy according to one of the preceding claims, these devices (I, II, III) being placed side by side.

12. Method of recovering wave energy in which is amplified in a channel (60, 160, 260) for amplifying the wave height, is made to emerge, directly via a valve (70; 170, 270), thus the amplified wave into a reservoir (71) for water storage, the potential energy of water stored in said reservoir (71) is converted to electrical energy, a channel is used (60, 160, 260) terminating in a nozzle (77) being in the form of a narrow slit extending in the vertical direction from the bottom (63) of said channel (60, 160, 260) to said top (64) of said channel (60, 160, 260), a valve (70, 170, 270) to close said nozzle (77) is used, in order to not disturb the entrance of water into said reservoir (71) a valve (70, 170, 270) is used, comprising at least one flexible and elastically deformable lip that is provided continuous to said rigid side walls (65) of said channel (60), **characterized in that** at least one device (I, II, III) according to one of claims 1 to 10 is used, **in that** at least one diffuser (72) is provided in said reservoir (71), said diffuser (72) comprising side walls (90) moving away from one another by an angle α of between 5 and 7 degrees, **in that** said diffuser is used to recover kinetic energy of the flow through the valve (70, 170, 270), for which the speed of the water is very high, slowing the flow to improve the efficiency of said device (I, II, III), and **in that** the height of said movable structure (51, 151, 251) is adjusted relative to said bottom (F) of the sea (M) according to at least one dynamic parameter of the marine, selected from the group comprising at least the tide level and the swell parameters such as wave height (Hs) and wave period (Tp).
